# EUROPEAN PATENT APPLICATION

(11) **EP 1 310 357 A1**
(43) Date of publication of application: **14.05.2003**
(21) Application number: 01126407.4
(22) Date of filing: 07.11.2001
(51) Int. Cl.: B32B 27/32, C08L 23/10, B29C 55/02, B29C 47/06

(54) **3-layer co-extruded biaxial-oriented pearly synthetic paper label used for integrally molding with bottle in mold**

(71) Applicant: NAN YA PLASTICS CORP., Taipei (TW)
(72) Inventor: Lin, Allen Fong Chin, Taipei (TW)
(74) Representative: Helms, Joachim, Dipl.-Ing. Patentanwalt

(57) **Abstract**

This invention relates to a 3-layer co-extruded biaxial-oriented pearly synthetic paper label used for integrally molding with bottle in mold: more particularly, it relates to a manufacturing equipment and method of said 3-layer co-extruded biaxial-oriented pearly synthetic paper label. The pearly synthetic paper label produced by the manufacturing method of this invention has a 3-layer structure which is layer-laminated with a printing paper surface layer, a foamed intermediate layer, and an inmold label-adhered layer; the pearly synthetic paper label can be applied in the blow-mold or eject-mold of polypropylene (PP) bottle or of high density polyethylene (HDPE) bottle, in which the pearly synthetic paper label is integrally molded by heat adhesion with the PP bottle or HDPE bottle under being molded in the mold; meanwhile, the abnormal situation like encapsulated air bubbles is prevented from happening so as to make the PP (or HDPE) bottle which is integrally molded with label have an excellent appearance and quality.

The main process of the manufacturing method of this invention is: various compositions which represent the printing paper surface layer (71), the foamed intermediate layer (72), and the in-mold label-adhered layer (73) respectively are co-extruded, by using two secondary extruders (11,13) and one primary extruder (12), through one T-type die (14) to form a 3-layer resin composition; then, through procedures of cooling/forming, biaxial orientation, corona discharge treatment, and laminating/rolling, a 3-layer co-extruded biaxial-oriented pearly synthetic paper label used for integrally molding with bottle in mold is obtained. This invention, of which the manufacturing process is simple and the cost is low, completely breaks through and fully improves the complicated process of conventional methods wherein the plastic film or a synthetic paper is either coated with a heat-melted adhesive or fabricated to be an in-mold label-adhered layer after being embossed; thus, this invention is of industrial applicability to the PP bottle or the HDPE bottle manufacturing industry.

## Description

### BACKGROUNG OF THE INVENTION

### 1. Field of this invention

This invention relates to a 3-layer co-extruded biaxial-oriented pearly synthetic paper label used for integrally molding with bottle in mold, and more particularly relates to the pearly synthetic paper label capably applied in the blow-mold or eject-mold of polypropylene (PP) bottle or of high density polyethylene (HDPE) bottle in which the pearly synthetic paper label is integrally molded by heat adhesion with the PP bottle or HDPE bottle.

### 2. Description of Prior Art

The process of manufacturing conventional back-adhesive label is included as follows: which first coating a release agent on a release base paper to make a release paper, then coating an adhesive layer on said release paper, and subsequently adheres a label on to said adhesive layer to completely form a back-adhesive label, then through printing and finally adhering the back-adhesive label to the bottle as a label.

As for the conventional in-mold label, which manufacturing method is included as follows: primarily by coating a heat-melted adhesive or embossing on one side of plastic film or synthetic paper to make the label-adhered layer of a label. In regard of relevant prior art, a biaxial stretched film is used as base material layer (intermediate layer), and adheres uniaxial stretched films to both up and bottom sides of the base layer to form a laminated synthetic paper with paper surface layer/base layer/label-adhered layer; then, through embossing on the label-adhered layer with an embossed pattern of 5 ∼ 25 lines per 2.54 cm to obtain a label product.

The structure of said label-adhered layer of laminated synthetic paper mentioned above is the most significant portion of label when used to be integrally molded with bottle in mold; since during the process of blow-molding or eject-molding, there exists some air between the bottle embryo material and the label used in-mold, so it is appropriate to have the label-adhered side coated with heat-melted adhesive or embossed in order to provide escape route for the air therein to prevent the air from being encapsulated between the label used in-mold and the molded container to deform the container with bad appearance. In addition, the heat plasticized resin and the coated heat melted adhesive used by the label-adhered layer of said laminated synthetic paper as a label are needed to be a heat-sealable material for the molded container to guarantee that the label does not peel off from the container while being used.

The main purpose of the 3-layer co-extruded biaxial-oriented pearly synthetic paper label used for integrally molding with bottle in mold disclosed by this invention is to improve and break through the prior manufacturing method of conventional back-adhesive label and the manufacturing method of conventional in-mold label used by manufacturers now.

Moreover, the cost of the conventional in-mold label for both embossing type and coating heat-melted adhesive type is more expensive than that of traditional back-adhesive label, which influences the willingness of manufacturer to utilize the former art. Only those international big manufacturers of detergent, chemical or oil who are concerned about some factors, such as counterfeiting prevention and enterprise image, would utilize it. So, it is not so popular than traditional back-adhesive label.

Both the manufacturing cost of the synthetic paper to manufacture is too high and the cost derived from expensive equipment is also too high but in low embossing rate are mainly reasons resulted in the conventional in-mold label unpopular due to its cost being too high, which reasons make the manufacturers dislike to accept it despite the high efficiency of conventional in-mold label capably used to be integrally molded process. Besides, for those manufacturers, who do the process of coating the heat-melted adhesive on one side of the plastic film or synthetic paper, the cost to obtain the material source of plastic film and synthetic paper is so high to them as to inhibit its popularity.

The applicant of this invention accumulates ten years of research and manufacturing experience on biaxial orientated polypropylene pearly synthetic paper label and knows that said biaxial orientated polypropylene pearly synthetic paper can be entered this market and applied with potential only when the cost structure and the technique of the in-mold label product are improved and broken through. Besides, the reason of being embossed and coated heat-melted adhesive on the synthetic paper or plastic film is lack of roughness for the surface of synthetic paper or plastic film, which is caused by the manufacturing equipment such as T-type die; particularly, as far as the adhering strength to container is concerned, adding other additives such as inorganic powder to increase the surface roughness is not appropriate. In regard of the in-mold label, especially when used for blow-molded, the roughness of the label-adhered layer (heat-sealable layer) is needed to be at least 2.5 µ to obtain a steady in-mold integrally molded label manufacturing efficiency.

### SUMMARY OF THIS INVENTION

The in-mold label of biaxial-oriented polypropylene pearly synthetic paper of this invention, which is capably used for integrally molding with bottle in mold, is manufactured by a 3-layer co-extruded method to be provided with a 3-layer-laminated structure of a printed paper surface layer/a foamed intermediate layer/an in-mold label-adhered layer; in addition, the in-mold label-adhered layer uses high density polyethylene having low melt flow index (MFI) and the copolymer of propylene and ethylene having high MFI; by utilizing the big difference in flow property thereof, an in-mold label-adhered surface layer of said in-mold label having a high roughness of more than 2.8 µ is produced to let the air between the container and the in-mold label escape instantaneously while being integrally molded in blow-molding and eject-molding, which prevents the air in between from being encapsulated by the in-mold label and the molded container, that would otherwise cause the molded product a bad appearance.

The pearly synthetic paper label of this invention is primarily applied to containers made of HDPE and PP, because the materials of container in the market used for containing detergents, chemicals, oil, beverage are mainly HDPE and PP. Therefore, in terms of containers made of HDPE and PP, the in-mold label-adhered layer of this invention, which is composed by the HDPE and the copolymer of propylene-ethylene with variable composition ratio according to different uses, is always an effective heat-sealable material. The amount of HDPE in the in-mold label-adhered layer is higher while used for HDPE bottles, and the amount of the copolymer of propylene-ethylene in the in-mold label-adhered layer is higher while used for PP bottles.

After completely printing, the in-mold pearly synthetic paper label of this invention is clamped by a robot arm and put into the mold of bottle and sucked onto the inner wall of the mold. While the mold is filled with the embryo of melted heat plasticized resin, the 3-layer co-extruded biaxial-oriented pearly synthetic paper label of this invention is then integrally molded with bottle or container formed in mold, and is heat-adhered thereto.

The application of in-mold label of this invention is able to save not only the material cost of release base paper, release agent and adhesive but also other cost derived from the process of coating the release agent and the adhesive layer. Therefore, the in-mold label disclosed by this invention has a great potential for application in the twenty-first century. In regard of cost, the manufacturer can be benefited as well in the long run, because the manufacturer only has to invest in robot arm, once for all, to put the label into the mold. In addition, the molded container and the used label can be reused as the same material, which meets the requirement of environmental protection, and it is easier to control the label source and blow-molding factory and to prevent counterfeiting.

This invention relates to a 3-layer co-extruded biaxial-oriented pearly synthetic paper label used for integrally molding with bottle in mold, and more particularly it relates to a manufacturing equipment and method of said 3-layer co-extruded biaxial-oriented pearly synthetic paper label. The main process of the manufacturing method of this invention is that various compositions, which represent the printing paper surface layer, the foamed intermediate layer and the in-mold label-adhered layer respectively, are co-extruded, by using two secondary extruders and one primary extruder, through one T-type die to form a 3-layer resin composition; then, through procedures of cooling/forming, biaxial orientation, corona discharge treatment, and laminating/rolling, a 3-layer co-extruded biaxial-oriented pearly synthetic paper label used for integrally molding with bottle in mold is obtained.

### BRIEF DESCRIPTION OF THE DRAWINGS

In order to describe advantages of this invention more in detail, the drawing figures are briefly described as follows:

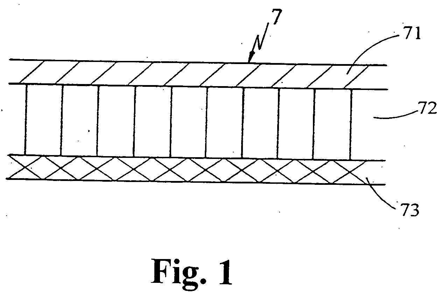

Fig. 1 is a structure drawing of the 3-layer co-extruded biaxial-oriented pearly synthetic paper label of this invention, wherein the upper layer is the printed paper surface layer (71), the intermediate layer is the foamed intermediate layer (72), and the lower layer is an in-mold layer-adhered layer (73).

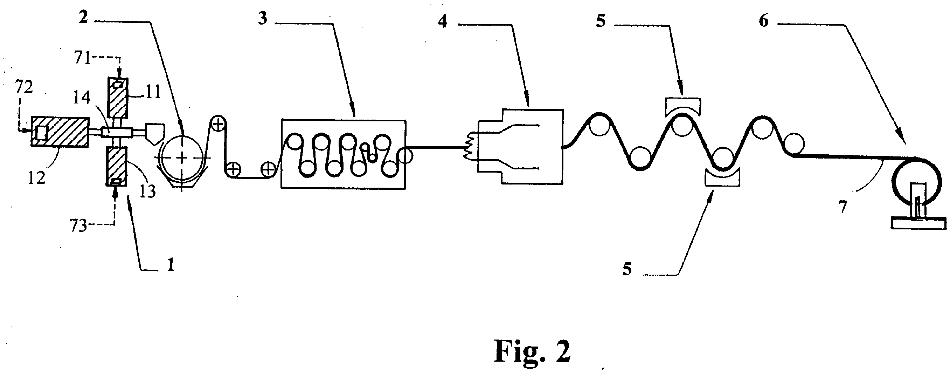

Fig. 2 is a manufacturing equipment drawing of the 3-layer co-extruded biaxial-oriented pearly synthetic paper label of this invention comprising, in accordance with manufacturing procedure, the extruder device (1), the cooling/shaping device (2), the longitudinal orientation device (3), the transverse orientation device (4), the corona discharge treatment device (5), and the rolling device (6).

### DETAILED DESCRITION OF THIS INVENTION AND THE PREFERRED EMBODIMENTS

Referring to Fig.1, the in-mold label (7) of this invention is provided with a 3-layer-laminated structure of a printed paper surface layer (71), a foamed intermediate layer (72), and an in-mold label-adhered layer (73).

The high roughness of said in-mold label-adhered layer (73) of this invention is mainly caused by the big difference of heat-melted flow property between HDPE and the copolymer of propylene-ethylene. Generally speaking, the selected MFI (melt flow index) of HDPE is preferably less than 1 and that of the copolymer of propylene-ethylene is preferably more than 4. In addition, the amount of used HDPE has more influence on the roughness, and the more the used HDPE, the higher the roughness.

For blow molding, the roughness of said in-mold label-adhered layer (73) of the in-mold label (7) applied to HDPE bottles is required to be more than 1.7 µ. Besides, since the bigger the bottle, the larger the label-adhered area and the rougher the roughness of the label-adhered layer (73), that the roughness being more than 2.5 µ is required for the steady manufacturing. However, since the PP bottle is usually smaller and its outer surface is smoother, which makes the air easier to escape, no problem is going to happen if the roughness of the label-adhered surface layer of the in-mold label applied to PP bottles, for blow-molded, is more than 1.7 µ.

Consequently, the roughness of said in-mold label-adhered layer (73) of this invention is controlled at above 2.8 µ to prevent the encapsulated air problem from happening for blow-molded manufacturing of said HDPE and PP bottles. As for eject-molded manufacturing, since the molded material pressure is bigger, which helps the escape of the air between the container and the label, the roughness requirement is not so strict as that of blow-molded manufacturing; the required roughness is about more than 1.1 µ for PP bottles and about more than 1.7 µ for HDPE bottles.

The correlation between the ratio of HDPE/propylene-ethylene copolymer and the roughness of the molded label-adhered surface layer and the blow-molded manufacturing or eject-molded manufacturing of PP bottles or HDPE bottles is listed as follows:

| Ratio | | High density polyethylene : Propylene-Ethylene | | | | |
|---|---|---|---|---|---|---|
| | | 0:100 | 10:90 | 20:80 | 30:70 | 40:60 |
| Roughness | | 0.4 µ | 1.3 µ | 2.5 µ | 3.2 µ | 3.5 µ |
| Blow-molded manufacturing | PP bottles | X | X | O | O | O |
| | HDPE bottles | X | X | Δ | O | O |
| Eject-molded manufacturing | PP bottles | X | O | O | O | O |
| | HDPE bottles | X | Δ | O | O | O |
| X: poor; Δ: not bad; O: good | | | | | | |

In addition, prior in-mold label is apt to the problem of orange skin shrinkage while molded which makes the prior in-mold label with an ill-looking appearance and further influences the value of the product. This invention has paid much attention on this problem. The reason to cause orange skin shrinkage happened is mainly that the prior in-mold label have too many and too large voids therein, and if the prior in-mold label is integrally molded with the container, the space of voids is then disappeared to cause the orange skin shrinkage happened in the prior in-mold label.

The 3-layer co-extruded biaxial-oriented pearly synthetic paper label used for integrally molding with bottle in mold of this invention controls the void density in an excellent condition (specific weight: about 0.85, void: small and uniform), so the problem of orange skin shrinkage does not happen.

Moreover, the printing quality and the ink receptivity to the in-mold label are very significant which the printing method comprises lithographic printing, gravure printing, and surface printing. Said printing methods and used ink can also be applied to plastic film sheet printing and synthetic paper printing. The in-mold label (7) of this invention uses ink for gravure printing and UV wheeling ink printing for surface printing to have good printing quality and ink receptivity.

The composition of in-mold label (7) and its manufacturing method and equipment of this invention are described in detail as follows:

### Composition of in-mold label of this invention

Referring to Fig.1, the 3-layer co-extruded biaxial-oriented pearly synthetic paper label (7) of this invention, used for integrally molding with bottle in mold, which is a layer-laminated product of biaxial-oriented 3-layer structure comprising a printed paper surface layer (71), a foamed intermediate layer (72), and an in-mold label-adhered layer (73), wherein the composition of the printed paper surface layer (71) is 78 ∼ 35 % by weight of polypropylene, 10 ∼ 25 % by weight of polyethylene, 10 ∼ 25 % by weight of calcium carbonate master-batch (M1B 40 ∼70 %), and 2 ∼ 15 % by weight of titanium dioxide master-batch (M1B 30 ∼60 %).

The composition of the foamed intermediate layer (72) is 88 ∼ 35 % by weight of polypropylene, 10 ∼ 25 % by weight of calcium carbonate master-batch (M1B 40 ∼70 %), 0 ∼ 5 % by weight of antistatic agent, and 2 ∼ 15 % by weight of titanium dioxide master-batch (M1B 30 ∼60 %).

The composition of the in-mold label-adhered layer (73) is 5 ∼60 % by weight of high density polyethylene and 95 ∼ 40 % by weight of the copolymer of propylene-ethylene.

Referring to Fig.2, said well stirred compositions of the printed paper surface layer (71), the foamed intermediate layer (72), and the in-mold label-adhered layer (73) are respectively extruded into the upper, middle, and lower paths of the T-type die of the extruder (1) to proceed with co-extrude molding to form a 3-layer resin composite which flows out of the outlet of the T-type die thereafter and through a cooling/shaping device (2), a longitudinal orientation device (3), a transverse oriented device (4), a corona discharge treatment device (5), and a rolling device (6) to obtain a layer-laminated product with 3-layer structure of the 3-layer co-extruded biaxial-oriented pearly synthetic paper label used for integrally molding with bottle in mold of this invention.

The pearly synthetic paper label of this invention uses polypropylene material, based on years of experience of the applicant, due to its specification being easy to control and no limitation on use; in addition, the molecular weight of polypropylene distributes relatively wider and the MFI (melt flow index) thereof is between 3.0 ∼ 3.5 where is easiest to proceed with high speed production.

The polyethylene resin of 0.1 ∼ 7 MFI (melt flow index) is selected by this invention, which makes the manufactured 3-layer co-extruded biaxial-oriented pearly synthetic paper label used for integrally molding with bottle in mold of this invention have an appropriate strengthening, an effect of paper-like, and an excellent paper surface roughness, printing quality, and ink receptivity.

Meanwhile, since the pearly synthetic paper label of this invention has an excellent whiteness, opacity, and effect of decreasing specific weight, the inorganic powder master-batch (M1B) used by this invention is selected from calcium carbonate, titanium dioxide, diatomaceous earth, clay, calcium oxide, silicon dioxide, or barium sulfate of which the surface is first treated and then fabricated to be master-batch (M1B).

The antistatic agent selected by this invention is normally selected by biaxial-oriented polypropylene (BOPP), however, the antistatic agent of high temperature resistance type can furthermore improve the static electricity resistance quality of the pearly synthetic paper label of this invention.

### Manufacturing Equipment and Production Condition of this invention

Referring to Fig.2, the manufacturing equipment of the pearly synthetic paper label of this invention comprises, according to manufacturing procedure, an extruder device (1), a cooling/shaping device (2), a longitudinal orientation device (3), a transverse orientation device (4), a corona discharge treatment device (5), and a rolling device (6).

The extruder device (1) is assembled by two single-screw secondary extruder having a hopper air-drawing device ( or double-screw extruder having a sleeve air-drawing device ) (11) (13) and one double-screw primary extruder having a sleeve air-drawing device ( or single-screw primary extruder having a hopper air-drawing device ) (12), each of which is respectively assembled with a T-type die. The working temperature of the extruder device (1), which is set according to the selected material and production speed, is normally set within the range of 180 degree C ∼ 280 degree C.

The composition material of the printed paper surface layer (71) of this invention is provided into the single-screw secondary extruder (or double-screw extruder having a sleeve air-drawing device) (11), then evenly stirred in the inlet which is at the front end of the single-screw secondary extruder (11), further blended by the screw of the single-screw secondary extruder (11), then extruded to the upper path of T-type die (14).

The composition material of the foamed intermediate layer (72) of this invention is provided into the double-screw primary extruder (12), then evenly stirred in the inlet which is at the front end of the double-screw primary extruder (12), further blended by the double-screw of the double-screw primary extruder ( or the single-screw primary extruder having a hopper air-drawing device ) (12) and air-drawn, then extruded to the middle path of T-type die (14).

The composition material of the in-mold label-adhered layer (73) of this invention is provided into the other single-screw secondary extruder (13), then evenly stirred in the inlet which is at the front end of the single-screw secondary extruder (13), further blended by the single-screw of the single-screw secondary extruder (13) and air-drawn, then extruded to the lower path of T-type die (14).

The composition materials of the printed paper surface layer (71), the foamed intermediate layer (72), and the in-mold label-adhered layer (73) are respectively and simultaneously put into the single-screw secondary extruder (11), the double-screw primary extruder (12), and the single-screw secondary extruder (or double-screw extruder having a sleeve air-drawing device) (13), then are together extruded into and converged in T-type die (14) to proceed with co-extrusion to be molded to a 3-layer resin composition, and further driven out from the outlet of T-type die (14) of the extruder device (1).

The cooling/shaping device (2) has a cooling roller and a water basin, of which the working temperature is set up to be an appropriate one according to the thickness and crystallization requirement of the layer-laminated sheet of the product, and the production speed. Said working temperature is normally kept between 15 degree C ∼ 70 degree C so as to cool down the 3-layer resin composition which is molded and extruded at a temperature of between 180 degree C ∼ 280 degree C. The 3-layer resin composition is shaped to a 3-layer-laminated sheet after being cooled down.

The longitudinal orientation device (3) preheats the cooled and shaped 3-layer-laminated sheet one more time, of which the working temperature is set up in accordance with the requirement of the thickness of the fabricated layer-laminated sheet, the production speed, the composition material and specific weight, and the orientation ratio. Said working temperature is normally kept between 110 degree C ∼ 150.degree C so as to fix the shape of the cooled 3-layer-laminated sheet after procedures of preheating, orienting, and tempering. After being oriented by the longitudinal orientation device (3), the cooled and shaped 3-layer-laminated sheet can normally be longitudinally oriented and tempered to 3 ∼ 6 times of orientation ratio.

The transverse orientation device (4) preheats the 3-layer-laminated sheet which has been longitudinally oriented by the longitudinal orientation device (3) once more, of which the working temperature is set up in accordance with the requirement of the thickness of the fabricated layer-laminated sheet, the production speed, the composition material and specific weight, and the orientation ratio. Said working temperature is normally kept between 140 degree C ∼ 190 degree C so as to again fix the shape of the longitudinally oriented 3-layer-laminated sheet after procedures of preheating, orienting, and tempering. After being oriented by the transverse orientation device (3), the longitudinally oriented 3-layer-laminated sheet can normally be transverse oriented to 5 ∼ 13 times of orientation ratio; then through tempering and cooling/fixing, a pearly synthetic paper label product of this invention is obtained.

The corona discharge treatment device (5) treats the shape-fixed pearly synthetic paper label with a power of 20 ∼ 120 KW of high frequency wave corona discharge to make the shape-fixed pearly synthetic paper label have an excellent and even surface tension which consequently makes the pearly synthetic paper label have marvelously receptivity to ink or gold foil while proceeded with gravure printing, surface printing, lithographic printing, screen printing, or gilding printing.

The rolling device (6) rolls up the pearly synthetic paper label (which has been treated with corona discharge) under an appropriate control of tension to have the pearly synthetic paper label product prevent bound groove or bad spreading problems from happening.

The following example is given as a preferred embodiment to illustrate characteristics (industrial applicability, innovation, and improvement) of the 3-layer co-extruded biaxial-oriented pearly synthetic paper label used for integrally molding with bottle in mold of this invention but not to limit the invention.

### Example

### (The preferred embodiment is a 3-layer co-extruded biaxial-oriented pearly synthetic paper label, with a thickness of 100µ, used for in-mold integral molding which can be applied inside a blow-molding mold or a eject-molding mold)

50 % by weight of polypropylene (MFI: 3.0), 20 % by weight of polyethylene (MFI: 2.0), 10 % by weight of titanium dioxide master-batch (M1B 50 %), and 20 % by weight of calcium carbonate master-batch (M1B 60 %) are evenly stirred in the inlet which is at the front end of the single-screw secondary extruder (11) having a hopper air-drawing device, further blended by the screw of the single-screw secondary extruder (11), then extruded to the upper path of T-type die (14);

In addition, 87 % by weight of polypropylene (MFI: 3.0), 5 % by weight of titanium dioxide master-batch (M I B 50 %), 5 % by weight of calcium carbonate master-batch (M1B 60 %), and 3 % by weight of antistatic agent are evenly stirred in the inlet which is at the front end of the double-screw primary extruder (12) having a sleeve air-drawing device, further blended by the screw of the double-screw primary extruder (12), then extruded to the middle path of T-type die (14);

Moreover, 30 % by weight of polyethylene (MFI: 1.0), and 70 % by weight of propylene-ethylene copolymer (MFI: 6.0) are evenly stirred in the inlet which is at the front end of the other single-screw secondary extruder (13), further blended by the screw of the single-screw secondary extruder (13) and air-drawn, then extruded to the lower path of T-type die (14);

Under the condition that the working temperature of the extruder device (1) being set at the range of 180 degree C ∼ 280 degree C, said three composition materials are co-extruded and molded to a 3-layer-laminated composition: the upper layer being the printed paper surface layer (71), the middle layer being the foamed intermediate layer (72), and the lower layer being the in-mold label-adhered layer (73); then further driven out from the outlet of T-type die (14) into the cooling/shaping device (2) of which the cooling roller is set at a temperature of 30 degree C and the water basin is set at a temperature of 35 degree C, thereby the 3-layer-laminated composition with a high temperature is cooled down and shaped to a 3-layer-laminated sheet; then led into the longitudinal orientation device (3) to be first preheated at a temperature of 120 degree C ∼ 130 degree C to be softened and then oriented by the longitudinal orientation device (3) with 3 ∼ 6 times of longitudinal orientation ratio and tempered to fix the shape; thereafter, the 3-layer-laminated sheet which has been longitudinally oriented is further led to the transverse orientation device (4) to be preheated at a temperature of 150 degree C ∼ 190 degree C to be softened once more and then oriented to 8 times of transverse orientation ratio and then tempered and cooled/fixed to a 3-layer co-extruded biaxial-oriented pearly synthetic paper label (with a thickness of 100 µ) used for in-mold integrally molded; after being cooled down at a temperature of 25 degree C, the pearly synthetic paper label is led to the corona discharge treatment device (5) to be treated with a power of 20 ∼ 120 KW of high frequency wave corona discharge to make the pearly synthetic paper label have an even surface tension; finally, the product of the 3-layer co-extruded biaxial-oriented pearly paper label (7) is rolled up by the rolling device (6) to obtain the 3-layer co-extruded biaxial-oriented pearly synthetic paper label ( with a thickness of 100 µ ) used for in-mold integral molding which can be applied to blow-molding or eject-molding of PP bottles and HDPE bottles.

The physical property of the 3-layer co-extruded biaxial-oriented pearly synthetic paper label used for integrally molding with bottle in mold of the preferred embodiment are listed as Table 1.

**Table 1**

| Physical property of the product | | Preferred embodiment | Testing method |
|---|---|---|---|
| Thickness (µ) | | 100 | TAPPI T-411 |
| Specific weight | | 0.85 | ASTM D 1248 |
| Opacity | | 87 | TAPPI T-425 |
| Moisturizing tension (dyne/cm) | Printed paper surface layer | 39 | ASTM D 2578 |
| | In-mold label-adhered layer | 31 | |
| Coefficient of Friction | Printed surface/Label-adhered surface | 0.37 | ASTM D 1894 |
| | Printed surface/Printed surface | 0.38 | |
| | Label-adhered surface/Label-adhered surface | 0.38 | |
| Brightness % ( Printed surface/Label-adhered surface ) | | 23/16 | TAPPI T-480 |
| Roughness % ( Printed surface/Label-adhered surface ) | | 2.4/3.2 | TAPPI T-555 |
| Whiteness ( % ) | | 96 | TAPPI T-525 |
| Surface resistance (Ω) | | 9 X 10¹² | ASTM D 257 |

## Claims

1. A 3-layer co-extruded biaxial-oriented pearly synthetic paper label used for integrally molding with bottle in mold, which is a biaxial-oriented 3-layer-laminated structure, **characterised in that** the upper layer is a printed paper surface layer of which the composition is 78 ∼ 35 % by weight of polypropylene, 10 ∼ 25 % by weight of polyethylene, 10 ∼ 25 % by weight of calcium carbonate master-batch (M₁B 40 ∼70 %), and 2 ∼ 15 % by weight of titanium dioxide master-batch (M₁B 30 ∼60 %); the intermediate layer is a foamed intermediate layer of which the composition is 88 ∼ 35 % by weight of polypropylene, 10 ∼ 25 % by weight of calcium carbonate master-batch (M₁B 40 ∼70 %), 0 ∼ 5 % by weight of antistatic agent, and 2 ∼ 15 % by weight of titanium dioxide master-batch (M₁B 30 ∼60 %); and the lower layer is an in-mold label-adhered layer of which the composition is 5 ∼ 60 % by weight of high density polyethylene and 95 ∼ 40 % by weight of the copolymer of propylene-ethylene.

2. A manufacturing equipment of a 3-layer co-extruded biaxial-oriented pearly synthetic paper label used for integrally molding with bottle, according to manufacturing procedure, comprises an extruder device, a cooling/shaping device, a longitudinal orientation device, a transverse orientation device, a corona discharge treatment device, and a rolling device, **characterised in that**
said extruder device is assembled by two single-screw secondary extruder having an air-drawing device and one double-screw primary extruder having a sleeve air-drawing device, each of which is respectively assembled with a T-type die; the working temperature of the co-extrusion is normally set within the range of 180 degree C ∼ 280 degree C; and a 3-layer-laminated resin composition is extruded out from the outlet of T-type die;
said cooling/shaping device has a cooling roller and a water basin, of which the cooling working temperature is normally kept between 15 degree C ∼ 70 degree C so as to cool a 3-layer-laminated resin composition (which is extruded under a high temperature by the extruder device) down to be a 3-layer-laminated layer sheet;
said longitudinal orientation device preheats and softens the cooled and shaped 3-layer-laminated sheet at a temperature of 110 degree C ∼ 150 degree C, then longitudinally orients and tempers it to fix the shape of the longitudinally oriented 3-layer-laminated sheet;
said transverse orientation device preheats and softens the 3-layer-laminated sheet which has been longitudinally oriented by the longitudinal orientation device once more at a temperature between 140 degree C ∼ 190 degree C, then transversely orients and tempers it to fix the shape of the longitudinally and transversely ( biaxial ) oriented 3-layer-laminated sheet;
said corona discharge treatment device treats the biaxial-oriented 3-layer-laminated sheet with a corona discharge treatment to make the biaxial-oriented 3-layer-laminated sheet have an excellent and even surface tension and to make the printing ink or gold foil have a marvelously receptivity so as to compose a 3-layer co-extruded biaxial-oriented pearly synthetic paper label used for in-mold integral molding; and
said rolling device rolls up the 3-layer co-extruded biaxial-oriented pearly synthetic paper label used for in-mold integral molding under an appropriate control of tension to prevent bound groove or bad spreading problems from happening.

3. The manufacturing equipment as defined in claim 2, **characterised in that** the cooled/shaped 3-layer-laminated sheet is longitudinally oriented by the longitudinal orientation device with 3 ∼ 6 times of longitudinal orientation ratio.

4. The manufacturing equipment as defined in claim 2, **characterised in that** the longitudinally oriented 3-layer-laminated sheet is again transversely oriented by the transverse orientation device with 5 ∼ 13 times of transverse orientation ratio.

5. The manufacturing equipment as defined in claim 2, **characterised in that** the cooled/shaped 3-layer-laminated sheet is longitudinally oriented by the longitudinal orientation device with 3 ∼ 6 times of longitudinal orientation ratio and again transversely oriented by the transverse orientation device with 5 ∼ 13 times of transverse orientation ratio.

6. A manufacturing method of a 3-layer co-extruded biaxial-oriented pearly synthetic paper label used for integrally molding with bottle in mold, **characterised in that** the procedures are:
(1) a printed paper surface layer composition having 78 ∼ 35 % by weight of polypropylene, 10 ∼ 25 % by weight of polyethylene, 10 ∼ 25 % by weight of calcium carbonate masterbatch (40 ∼ 70 %), and 2 ∼ 15 % by weight of titanium dioxide masterbatch (30 ∼ 60 %) is evenly stirred in the inlet which is at the front end of the single-screw secondary extruder of the extruder device, further blended by the screw of the single-screw secondary extruder, then extruded to the upper path of T-type die;
(2) in addition, a foamed intermediate layer composition having 88 ∼ 35 % by weight of polypropylene, 10 ∼ 25 % by weight of calcium carbonate masterbatch (40 ∼ 70 %), 0 ∼ 5 % by weight of antistatic agent, and 2 ∼ 15 % by weight of titanium dioxide masterbatch (30 ∼ 60 %) is evenly stirred in the inlet which is at the front end of the double-screw primary extruder, further blended by the screw of the double-screw primary extruder, then extruded to the middle path of T-type die;
(3) moreover, an in-mold label-adhered layer composition having 5 ∼ 60 % by weight of polyethylene, and 95 ∼ 40 % by weight of propylene-ethylene copolymer is evenly stirred in the inlet which is at the front end of the other single-screw secondary extruder, further blended by the single-screw of the single-screw secondary extruder, then extruded to the lower path of T-type die;
(4) the working temperature of the extruder device is set between the range of 180 degree C ∼ 280 degree C, said three compositions are co-extruded and molded to a 3-layer-laminated composition: the upper and the lower layers being the printed paper surface layer or the in-mold label-adhered layer, the middle layer being the foamed intermediate layer; then further driven out from the outlet of T-type die into the cooling/shaping device;
(5) the cooling/shaping device cools down and shapes the high temperature 3-layer-laminated composition into a 3-layer-laminated sheet, then leads it to the longitudinal orientation device;
(6) the longitudinal orientation device preheats and softens the 3-layer-laminated sheet under a temperature of 110 degree C ∼ 150 degree C, next, longitudinally orients it with 3 ∼ 6 times of longitudinal orientation ratio, then tempers it to fix its shape and leads it to the transverse orientation device;
(7) the transverse orientation device again preheats and softens the longitudinally oriented 3-layer-laminated sheet at a temperature of 140 degree C ∼ 190 degree C, next, transversely orients it with 5 ∼ 13 times of transverse orientation ratio, then tempers it to fix its shape to make it become a longitudinally and transversely oriented 3-layer-laminated sheet, and cools it at a temperature of 25 degree C and leads it to the corona discharge treatment device;
(8) the corona discharge treatment device treats the longitudinally and transversely oriented ( biaxial-oriented ) 3-layer-laminated sheet with a power of 20 ∼ 120 KW of high frequency wave corona discharge to make the pearly synthetic paper label have an even surface tension so as to compose a 3-layer co-extruded biaxial-oriented pearly synthetic paper label used for integrally molding with bottle in mold; and
(9) the rolling device rolls up the product of the 3-layer co-extruded biaxial-oriented pearly synthetic paper label.
